# EUROPEAN PATENT SPECIFICATION

(11) **EP 2 434 956 B1**
(45) Date of publication and mention of the grant of the patent: **10.02.2016**
(21) Application number: 10721081.7
(22) Date of filing: 27.05.2010
(51) Int. Cl.: G03B 42/04

(54) **UNIVERSAL DENTAL X-RAY SENSOR HOLDER WITH ELASTOMERIC CLAMPING VISE**
UNIVERSELLER ZAHNRÖNTGENSENSORHALTER MIT ELASTOMEREINSPANNBACKE
DISPOSITIF DE MAINTIEN DE CAPTEUR DE RAYONS X DENTAIRE UNIVERSEL AVEC ÉTAU DE SERRAGE ÉLASTOMÈRE

(30) Priority: 27.05.2009 US 217120 P
(43) Date of publication of application: 04.04.2012
(73) Proprietor: Dentsply International Inc., York, PA 17401 (US)
(72) Inventor: STEWARD, Curtis, L., Jr., Sandwich IL 60548 (US)
(74) Representative: Blodig, Wolfgang
(86) International application number: PCT/US2010/036344
(87) International publication number: WO 2010/138684

(56) References cited:
- EP-A1- 1 696 264
- WO-A1-01/63357
- WO-A1-2007/061865
- WO-A2-2007/025015
- DE-A1-102007 012 197
- US-A- 2 253 282
- US-A1- 2004 170 253
- US-A1- 2008 025 467

## Description

### TECHNICAL FIELD

The present invention generally relates to the taking of dental x-rays. More particularly, the invention relates to a holder for an x-ray sensitive recording material that secures the recording material in relation to the oral cavity during the x-ray procedure. The invention is more specifically directed toward a holder device having a clamping vise, wherein at least one jaw of the vise is biased in a particular direction by an elastomeric member which is affixed to the jaw, thereby physically contacting and securing the recording material.

### BACKGROUND OF THE INVENTION

DE 10 2007 012 197 discloses a sensor holder with a claimping mechanism.

It is known in the dental industry to use x-rays as an aid in diagnosis and treatment procedures. X-ray energy is passed through the target location and toward a recording material, such as a film or digital sensor. It is imperative in the taking of a useful x-ray image to property align the recording material with respect to the target location, and to keep it secured during the x-ray procedure. A number of devices have been developed effect such alignment, including for example, U.S. Pat. No. 6,343,875 which is hereby incorporated by reference with respect to the general nature of holders and recording material. Although the present invention has particular application to digital sensor recording materials which are often held in an outer casing, it will be appreciated that the invention also has application to use with any recording materials including films, phosphor plates or the like. All such devices shall be collectively referred to by such terms as "sensors" or the like unless otherwise specifically stated

When using certain recording members, such as in particular digital sensors, the dental professional often must align the sensor holder in a number of different positions within the oral cavity. That is, it is often the case that different sensors and different sensor holders must be used for the taking of a bitewing x-ray as opposed to a periapical, peripheral or anterior x-ray image. While the different holders and sensors may result in a useful x-ray image, it still takes additional time and effort to sort through and employ the correct items in the correct order for each image. Because of this, the desire for more "universal" sensors has arisen and has been met with some success. In the same way, the desire for a universal sensor holder that can be used for different procedures with the same patient would also be highly desirable.

In the past, "universal;" sensor holders have employed ratchet mechanisms, elastic loops (such as in U.S. Pat. No. 6.461,038), twisting or rotating devices or the like. When it is realized that especially in the case of a digital sensor that there is the added concern of an attached wire connecting the sensor to a computer or the like, it is understood that it is often difficult to easily and quickly employ the previous sensor holders.

A need exists therefore, for a simple and yet effective dental sensor holder that is more truly universal in nature as compared with the sensor holders previously known in the art. The sensor holder should be able to secure sensors of various shapes and sizes in a manner suitable for use during the procedure of taking a dental x-ray image.

### BRIEF DISCLOSURE OF THE INVENTION

In light of the foregoing, it is a first aspect of the present invention to provide a holder for a dental x-ray recording material, such as a film, digital device or other sensor.

It is another aspect of the invention to provide such a device having a clamping structure that can be used to physically secure the sensor.

Yet another aspect is to provide such a sensor holder device wherein the clamping structure is in the nature of a vise having at least one rigid jaw that is elastomerically biased in a particular direction, generally toward the sensor to secure the sensor against the jaw.

In general according to the invention, a holder device for securing a dental x-ray sensor during an x-ray imaging procedure is provided with a clamping section. The clamping section includes at least one rigid vise jaw configured to physically contact the sensor, and an elastomeric biasing member. The elastomeric biasing member has first and second ends, wherein the first end of the elastomeric biasing member is operatively affixed to the at least one jaw and the second end of the elastomeric biasing member is affixed to a support structure, such that the elastomeric biasing member can be stretched when the at least one jaw is moved in a direction away from the support surface, and whereby the elastomeric biasing member then exerts a biasing force in an opposite direction.

There is also provided according to the invention, a method of securing a dental x-ray sensor for use during the taking of a dental x-ray image, includes the step of securing the sensor with a holder device having a clamping section; said clamping section including at least one rigid vise jaw configured to physically contact the sensor, and an elastomeric biasing member; said elastomeric biasing member having first and second ends; said first end of said elastomeric biasing member operatively affixed to said at least one jaw and said second end of said elastomeric biasing member being affixed to a support structure, such that said elastomeric biasing member can be stretched when said at least one jaw is moved in a direction away from said support surface, whereby said elastomeric biasing member then exerts a biasing force in an opposite direction. The inventive method also includes the further step of moving the jaw in a direction away from said support surface, placing the sensor between said jaw and said support surface and allowing the biasing force of said elastomeric biasing member to draw the jaw into physical engagement with the sensor.

These and other aspects and objects of the invention which shall become apparent from the present disclosure, are carried out by the invention as herein described and by any attached claims.

### BRIEF DESCRIPTION OF THE DRAWINGS

Fig. 1 is a perspective view of one embodiment of a sensor holder according to the present invention, shown for environmental purposes as used securing an exemplary digital dental x-ray sensor.
Fig. 2 is a side, elevational view of the sensor holder of Fig. 1.
Fig. 3 is a perspective view of an alternative embodiment of a sensor holder according to the present invention.
Fig. 4 is a side, elevational view of an alternative embodiment a sensor holder embodying the concepts of the present invention.
Fig. 5 is a perspective view of the sensor holder of Fig. 4.
Fig. 6 is another alternative embodiment a sensor holder embodying the concepts of the present invention.
Fig. 7 is another alternative embodiment a sensor holder embodying the concepts of the present invention.
Fig. 8 is another perspective view of the sensor holder of Fig. 7.
Fig. 9 is a closer perspective view of the sensor holder of Fig. 5.
Fig. 10 is a perspective view of two portions of the sensor holder of Fig. 9.
Fig. 11 is an exploded view of the sensor holder of Fig. 9.

### PREFERRED EMBODIMENTS FOR CARRYING OUT THE INVENTION

A sensor holder according to the present invention is generally designated by the number 10 on the attached drawings. The sensor holder 10 is shown on the drawings as used with a digital sensor 11, it being understood that the term "sensor" and the like is used to encompass any recording material used to receive x-ray energy for use in later visual and/or digital review, including without limitation, digital sensors, phosphor plates, film (and its conventional packaging or envelope container) or the like. Sensor holder 10 and the various embodiments thereof as will be described below, can be made from a material suitable for use in the oral cavity, and may be disposable or sterilizable by conventional means such as autoclaving or the like.

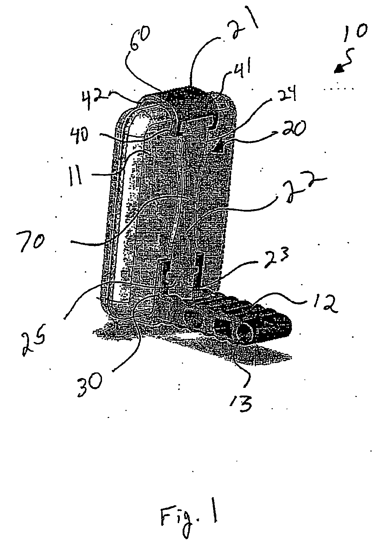

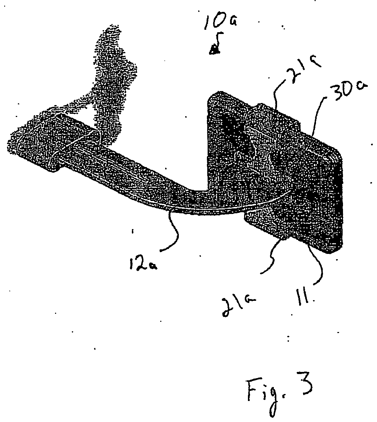

Fig. 1 depicts holder 10 generally configured for the taking of an anterior dental x-ray. As such, it is provided with a suitable bite block 12 having apertures 13 for receiving an aiming arm (not shown) as is standard in the industry. Except as specifically discussed herein, the bite block 12 is not necessarily a part of the invention. For example, an alternative embodiment of a holder, holder 10a is shown in Fig. 3 in a configuration that is useful for example, in the taking of a bitewing x-ray image. Again, the bite block 12a or holder 10a is standard in the industry and not necessarily a part of the invention, again except as will otherwise be discussed. Although the present discussion will generally be made with respect to holder 10, it will be understood that the discussion has similar application to the similar structures of holder 10a.

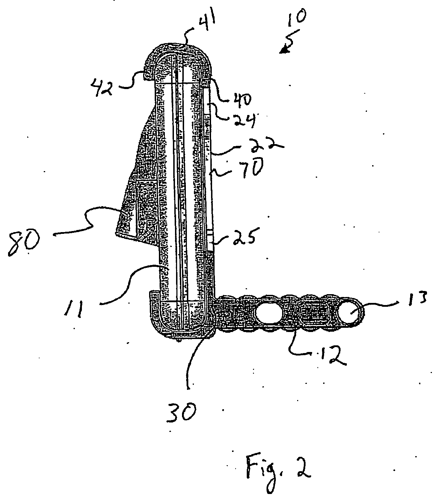

In order to secure sensor 11 in holder 10, holder 10 is provided with a clamping mechanism 20, which generally includes at least one rigid vise jaw 21 and an elastomeric biasing member 22. Elastomeric biasing member 22 is preferably relatively flat or ribboned shaped (see Fig. 2), and has a first and a second end, 24 and 25 respectively on the drawings. The first end 24 of the elastomeric biasing member 22 is affixed to jaw 21 and the second end 25 of the elastomeric biasing member 22 is affixed to a support structure 30 of holder 10. Support structure 30 can be any structure to which second end 25 can be affixed, such as for example, an extended portion of bite block 12 as shown in Fig. 1.

In use, a user will move jaw 21 in a direction away from support surface 30, or indeed away from sensor 11 if sensor 11 is already in place. If not, sensor 11 is then placed between jaw 21 and support member 30. Due to the elastomeric nature of elastomeric biasing member 22, it is first stretched by such movement, and then when the moving force is removed the elastomeric nature causes the elastomeric biasing member to contract, thereby biasing the jaw 21 in a direction toward support surface 30 and indeed toward sensor 11. Jaw 21 physically touches or contacts sensor 21 and holds sensor 11 between itself and support surface 30. It will be appreciated that the elastomeric biasing member 22 can be stretched to different lengths, thereby accommodating sensors of different sizes and shapes.

Jaw 21 is preferably provided with surfaces that facilitate efficient physical contact with sensor 11. For example, as shown on the drawings, jaw 21 may be provided with contiguously formed or affixed back 40, shoulder 41 and lip 42, thereby being U-shaped therebetween. The U-shape cradles the sensor 11 in manner that the biasing force exerted by elastomeric biasing member 22 is focused in manner to appropriately secure sensor 11. Hence, jaw 21 is drawn toward support surface 30 and sensor 11 until jaw 21 physically contacts sensor 11.

Similarly, support surface 30 may also be provided with a U-shaped jaw 50 of similar and even complementary design to that of jaw 21, as is shown in Fig. 2. Fig. 3 shows a support surface 30a that is configured to be relatively flat so as to support the side sensor 11 in a manner suitable for its intended x-ray procedure.

Any means of affixing elastomeric biasing member 22 to jaw 21 and/or support surface 30 is within the scope of the invention. This may take the form of a mechanical interlock, a chemical bond, an adhesive bond, a weld or the like without limitation. One preferred securing arrangement is shown on the drawings as providing with at least one end of elastomeric biasing member 22 such as first end 24 with an expanded portion 60. Jaw 21 is provided with a complementary shaped aperture 61 to receive expanded portion 60. Because expanded portion 60 is larger that at least the immediately contiguous portions of elastomeric biasing member 22, it physically interlocks with and is mechanically held within receiving aperture 61. An adhesive or other chemical bond may also be effected therebetween.

As stated above, it is preferred that elastomeric biasing member 22 is a flat, elongated piece of material. The preferred member 22 may be thought of as being a ribbon, although any configuration may be employed (such as for example, a square or round rubber band shape - not shown). When stretched as shown on the drawings, elastomeric biasing member 22 may show in the approximate area of its mid-section 70 a portion having a smaller width than an end such as end 24, although not all members may show such an area.

In the alternative embodiment of the sensor 10a shown in Fig.3, there are provided two jaws 21a and correspondingly two elastomeric biasing members 22a. The function of the support surface 30 as above described with respect to drawing Figs. 1 and 2 is thus at least partially effected by the two jaws 21a in addition if used, the support 30a. That is, if desired, any number of jaws 21, 21a or elastomeric biasing members 22, 22a can be employed within the scope of the invention.

It will be appreciated, as shown for example in Fig. 2, that a sensor having an attached wire can be successfully secured by the device of the present invention. The wire itself is not shown on the drawings, but an exemplary attachment point 80 is shown on the sensor 11 depicted in Fig. 2.

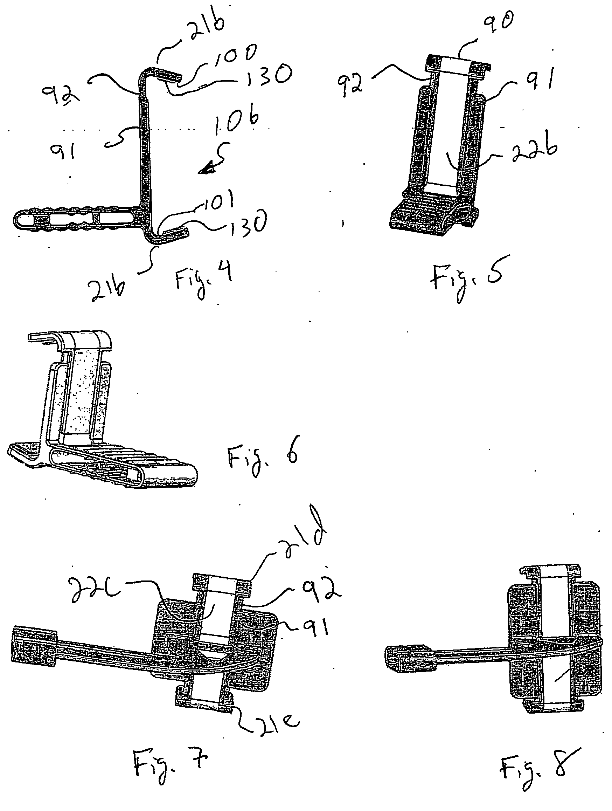

Fig. 4 shows a further embodiment of a sensor holder according to the invention, and is designated 10b on the drawings. Sensor holder 10b shows a lifted L configuration of jaws 21b. Sensor holder 10b is also provided with overmolds 90 on the outer areas of sensor 10b for patient comfort. As such, overmolds 90 are preferably fabricated from a soft rubber, polymer or other material to provide patient comfort.

Sensor 10b is also configured such that opposite jaws 21b in a two-jaw embodiment are each carried on a cooperating and interlocking tracking system, such as track 91 and a spline or rail 92. That is, rail 92 is received within and guided by track 91, such that the biasing force provided by elastomeric biasing member 22b causes the jaws 21b to be physically drawn toward each other and which are guided by the physical interaction of rail 92 riding within track 91. Movement of rail 92 within track 91 is permitted generally within the direction of forces applied by elastomeric biasing member 22b, but movement outside of such track is prevented. Thus the lateral alignment of jaws 21b with respect to each other is maintained.

In the embodiment of the sensor 10b as shown on the drawings, track 91 is shown as being contiguously formed with one jaw21b, while rail 92 is shows as being contiguously formed with an opposing jaw 21b. Each is movable toward or away from each other in an otherwise restricted manner by the physical interaction between track 91 and rail 92. That is, jaw faces 100 and 101 are moveable toward and away from each other in the otherwise restricted manner. Figs. 4-11 show embodiments of the invention of sensor 10b as employed with different bite blocks and configurations for different x-ray images of the oral cavity.

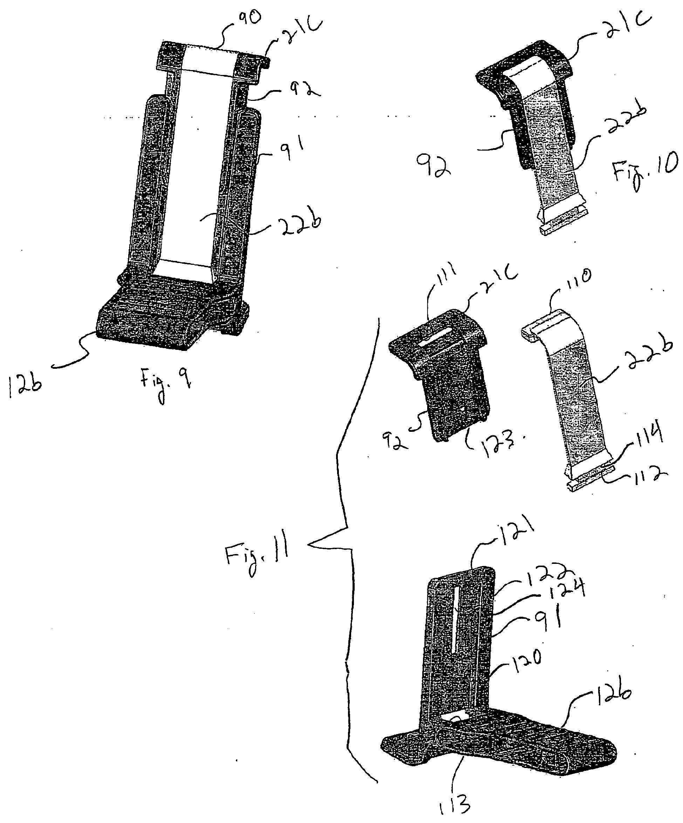

As shown in Figs. 9-11 particularly, biasing member 22b may be affixed to an upper jaw 21c by providing an engagement block 110 that is received within and physically held in place by cooperating aperture 111 carried by upper jaw 21c. Similarly, the other end of biasing member 22c may be provided with a second engagement block 112 that is similarly cooperatively received by aperture 113 in bite block 12b. To further facilitate the holding of biasing member 22b within aperture 113 (or 111 but not shown as such), second engagement block 112 may be provided with neck 114 to provide appropriate surfaces for physical interaction with complementary surfaces of aperture 113. Of course, any arrangement of such physical engagements of any shape or design are within the scope of the invention, with or without chemical bonding agents, adhesives, welds or the like.

In one embodiment of the invention, track 91 is provided at a predetermined position with a stop block 120 which may limit the travel of a rail 92 therein by physical contact therewith, or it may also be provided as a strengthening web for the rail and/or other sensor structures.

In a still further embodiment of the invention, one portion of sensor 10b, such as that portion 121 contiguous with bite block 12b and extending therefrom, may be provided with a guide slot 122. In this embodiment, upper jaw 21 is provided at some location thereon with a tab 123 configured to be received within guide slot 122. It will be appreciated that tab 123 and hence upper jaw 21c will be free to move within guide slot 122 in a direction of the longitudinal extension of guide slot 122, but tab 123 will also be constrained from moving out of guide slot 122 by physical interaction with the sidewall 124 thereof. It will be further appreciated that the use of guide slot/tab 122/123 may be used with an embodiment of the sensor 10b with track/rail 91/92, and also with a sensor 10 without such track or rails (that embodiment not specifically being shown).

As shown in Figs. 7 and 8, with an embodiment of a sensor 10c according to the invention, of the type having two substantially identical jaws 21d and 21e each having rails 92b riding within a track 91b similar to rails 92 and 91 discussed above, biasing member 22c may be overmolded on both jaws 21d and 21e to provide for patient comfort. Further still, any of the jaws 21, 21a, 21b or the like may also be provided with a gripping pad 130 (Fig. 4) to further facilitate gripping of a sensor (not shown). It will be appreciated that by being somewhat soft and pliable, the preferred configuration such as when made of a suitable elastomer or other polymer, pads provide for more effective gripping by being able to deform and hence conform to the surface of the having a harder outer surface than pads 130.

It should now be apparent that a sensor holder as herein described carries out the various aspects of the invention as set forth, and otherwise constitutes an advancement in the art of dental sensor holders. The invention has been described herein and exemplified on the drawings without attempting to show all of the variations that are within the scope thereof. The scope of the invention shall only be determined by any attached claims.

## Claims

1. A holder device for securing a dental x-ray sensor (11) during an x-ray imaging procedure comprising a clamping section; wherein either said clamping section
(i) including a support structure (30) and at least one rigid vise jaw (21) configured to physically contact the sensor (11), wherein the holder is **characterized in that** the clamping section further includes an elastomeric biasing member (22) adapted to be stretched to different lengths, thereby accommodating sensors of different sizes and shapes; said elastomeric biasing member (22) having first and second ends; said first end of said elastomeric biasing member (22) operatively affixed to said at least one jaw (21) and said second end of said elastomeric biasing member (22) being affixed to said support structure, such that said elastomeric biasing member (22) can be stretched when said at least one jaw (21) is moved in a direction away from said support surface (30), whereby said elastomeric biasing member (22) then exerts a biasing force in an opposite direction, or said clamping section
(ii) including first and second vise jaws (21d, 21e) configured to contact the sensor, wherein the holder is **characterized in that** said clamping section further includes an elastomeric biasing member (22) adapted to be stretched to different lengths, thereby accommodating sensors of different sizes and shapes; said elastomeric biasing member (22) having first and second ends; each of said first and second end of said elastomeric biasing member (22) operatively affixed to said first and second jaws (21d, 21 e) respectively, such that said elastomeric biasing member (22) can be stretched when at least one of said first or second jaws (21d, 21 e) is moved in a direction away from the other said first or second said jaw (21d, 21 e), whereby said elastomeric biasing member (22) then exerts a biasing force in an opposite direction.

2. A holder (10) as in claim 1 wherein said jaw (21) is provided with a lip to be complementary with the structure of the sensor (11) to which it is physically contacted when the sensor (11) is held in the holder device.

3. A holder (10) as in claim 1, wherein said support surface (30) is contiguously formed with a bite block.

4. A holder (10) as in claim 1, wherein said first end of said elastomeric biasing member (22) is provided with an interlocking, expanded portion that is receivable within a substantially complementary-shaped receiving portion in said jaw (21).

5. A holder (10) as in claim 4, wherein second end of said elastomeric biasing member (22) is provided with a second interlocking, expanded portion that is receivable within a substantially complementary-shaped receiving portion in said support surface (30).

6. A holder (10) as in claim 4, wherein said expanded portion is bonded to said receiving portion.

7. A holder (10) as in claim 6 wherein said bond is a chemical bond.

8. A holder (10) as in claim 1 wherein said elastomeric biasing member (22) is a relatively flat length of an elastomer.

9. A holder (10) as in claim 8 wherein said elastomeric biasing member (22) is provided with a mid-section between said first and second ends thereof.

10. A method of securing a dental x-ray sensor (11) for use during the taking of a dental x-ray image, comprising the step of: securing the sensor (11) with a holder device according to claim 1 having a clamping section; said clamping section including
(a) a support structure (30), and
(b) at least one rigid vise jaw (21) configured to physically contact the sensor (11),
**characterized in that** said clamping section further includes an elastomeric biasing member (22); said elastomeric biasing member (22) having first and second ends; said first end of said elastomeric biasing member (22) operatively affixed to said at least one jaw (21) and said second end of said elastomeric biasing member (22) being affixed to said support structure (30), such that said elastomeric biasing member (22) can be stretched when said at least one jaw (21) is moved in a direction away from said support surface (30), whereby said elastomeric biasing member (22) then exerts a biasing force in an opposite direction.

11. The method of claim 10 comprising the further step of moving the jaw (21) in a direction away from said support surface (30), placing the sensor (11) between said jaw (21) and said support surface (30) and allowing the biasing force of said elastomeric biasing member (22) to draw the jaw (21) into physical engagement with the sensor (11).

12. A holder (10) as in claim 1, wherein said first jaw is provided with a track physically receiving a rail carried by said second jaw, such that movement of the faces of said jaws is permitted but lateral movement is restricted.

13. A holder (10) as in claim 12 provided with an overmolded area for patient comfort.

## Patentansprüche

1. Haltevorrichtung zum Feststellen eines zahnmedizinischen Röntgensensors (11) während eines Röntgenbildgebungsverfahrens, umfassend einen Klemmbereich, wobei der Klemmbereich entweder:
(i) eine Trägerstruktur (30) einschließt und wenigstens eine feste Klemmbacke (21), die so konfiguriert ist, dass sie mit dem Sensor (11) physikalisch in Kontakt tritt, wobei die Halterung **dadurch gekennzeichnet ist, dass** der Klemmbereich ferner ein elastomeres Vorspannelement (22) einschließt, das so angepasst ist, dass es auf verschiedene Längen gedehnt werden kann, damit Sensoren verschiedener Größen und Formen aufgenommen werden; wobei das elastomere Vorspannelement (22) erste und zweite Enden aufweist, wobei das erste Ende des elastomeren Vorspannelements (22) operativ an der wenigstens einen Backe befestigt (21) ist und das zweite Ende des elastomeren Vorspannelements (22) an der Trägerstruktur befestigt ist, so dass das elastomere Vorspannelement (22) gedehnt werden kann, wenn die wenigstens eine Backe (21) in eine Richtung weg von der Trägeroberfläche (30) bewegt wird, wobei das elastomere Vorspannelement (22) dann eine Spannkraft in die Gegenrichtung ausübt, oder wobei der Klemmbereich
(ii) erste und zweite Klemmbacken (21 d, 21 e) einschließt, die so konfiguriert sind, dass sie mit dem Sensor in Kontakt treten, wobei die Halterung **dadurch gekennzeichnet ist, dass** der Klemmbereich ferner ein elastomeres Vorspannelement (22) einschließt, das so angepasst ist, dass es auf verschiedene Längen gedehnt werden kann, damit Sensoren verschiedener Größen und Formen aufgenommen werden; wobei das elastomere Vorspannelement (22) erste und zweite Enden aufweist, von denen jedes erste und jedes zweite Ende des elastomeren Vorspannelements (22) operativ an den ersten, beziehungsweise zweiten Backen (21 d, 21 e) befestigt ist, so dass das elastomere Vorspannelement (22) gedehnt werden kann, wenn wenigstens eine der ersten oder zweiten Backen (21 d, 21 e) in eine Richtung weg von der anderen ersten oder zweiten Backe (21 d, 21 e) bewegt wird, wobei das elastomere Vorspannelement (22) dann eine Spannkraft in die Gegenrichtung ausübt.

2. Halterung (10) nach Anspruch 1, wobei die Backe (21) mit einer Lippe versehen ist, die zu der Struktur des Sensors (11) komplementär ist, mit der sie physikalisch in Kontakt tritt, wenn der Sensor (11) in der Haltevorrichtung aufgenommen ist.

3. Halterung (10) nach Anspruch 1, wobei die Trägeroberfläche (30) zusammen mit einer Bissplatte ausgebildet ist.

4. Halterung (10) nach Anspruch 1, wobei das erste Ende des elastomeren Vorspannelements (22) mit einem ineinandergreifenden, ausgeweiteten Anteil bereitgestellt wird, der von einem im Wesentlichen komplementär geformten Aufnahmeanteil in der Backe (21) aufnehmbar ist.

5. Halterung (10) nach Anspruch 4, wobei das zweite Ende des elastomeren Vorspannelements (22) mit einem zweiten ineinandergreifenden, ausgeweiteten Anteil bereitgestellt wird, der von einem im Wesentlichen komplementär geformten Aufnahmeanteil in der Trägeroberfläche (30) aufnehmbar ist.

6. Halterung (10) nach Anspruch 4, wobei der ausgeweitete Anteil an den Aufnahmeanteil gebunden ist.

7. Halterung (10) nach Anspruch 6, wobei wobei die Bindung eine chemische Bindung ist.

8. Halterung (10) nach Anspruch 1, wobei das elastomere Vorspannelement (22) ein relativ flache Bahn eines Elastomers ist.

9. Halterung (10) nach Anspruch 8, wobei das elastomere Vorspannelement (22) mit einem Mittelabschnitt zwischen den ersten und zweiten Enden desselben bereitgestellt wird.

10. Verfahren zum Feststellen eines zahnmedizinischen Röntgensensors (11) zur Verwendung während der Aufnahme eines zahnmedizinischen Röntgenbildes, umfassend die folgenden Schritte:
Feststellen des Sensors (11) mit einer Haltevorrichtung nach Anspruch 1, die einen Klemmbereich aufweist; wobei der Klemmbereich (a) eine Trägerstruktur (30) einschließt, und (b) wenigstens eine feste Klemmbacke (21), die so konfiguriert ist, dass sie physikalisch mit dem Sensor (11) in Kontakt tritt,
**dadurch gekennzeichnet, dass** der Klemmbereich ferner ein elastomeres Vorspannelement (22) einschließt; wobei das elastomere Vorspannelement (22) erste und zweite Enden aufweist, wobei das erste Ende des elastomeren Vorspannelements (22) operativ an der wenigstens einen Backe befestigt (21) ist und das zweite Ende des elastomeren Vorspannelements (22) an der Trägerstruktur (30) befestigt ist, so dass das elastomere Vorspannelement (22) gedehnt werden kann, wenn die wenigstens eine Backe (21) in eine Richtung weg von der Trägeroberfläche (30) bewegt wird, wobei das elastomere Vorspannelement (22) dann eine Spannkraft in die Gegenrichtung ausübt.

11. Verfahren nach Anspruch 10, ferner den Schritt des Bewegens der Backe (21) in eine Richtung weg von der Trägeroberfläche (30) umfassend, Platzieren des Sensors (11) zwischen der Backe (21) und der Trägeroberfläche (30) und Ermöglichen, dass die Spannkraft des elastomeren Vorspannelements (22) die Backe (21) in eine physikalische Bindung mit dem Sensor (11) zieht.

12. Halterung (10) nach Anspruch 1, wobei die erste Backe mit einer Führung versehen ist, die die von der zweiten Backe getragene Schiene physikalisch aufnimmt, so dass die Bewegung der Flächen der Backen zugelassen wird, eine laterale Bewegung jedoch verhindert wird.

13. Halterung (10) nach Anspruch 12, die mit einem umspritzten Bereich für den Patientenkomfort bereitgestellt wird.

## Revendications

1. Dispositif de maintien pour fixer un capteur de rayons X dentaire (11) pendant une procédure de radiographie comprenant une section de serrage ; dans lequel ladite section de serrage:
(i) comprend une structure de support (30) et au moins une mâchoire d'étau rigide (21) configurée pour être physiquement en contact avec le capteur (11), le dispositif de maintien étant **caractérisé en ce que** la section de serrage comprend en outre un élément de sollicitation élastomère (22) adapté pour être étiré à différentes longueurs, acceptant ainsi des capteurs de différentes tailles et formes; ledit élément de sollicitation élastomère (22) ayant des première et seconde extrémités;
ladite première extrémité dudit élément de sollicitation élastomère (22) étant fixée de manière opérationnelle à ladite au moins une mâchoire (21) et ladite seconde extrémité dudit élément de sollicitation élastomère (22) étant fixée sur ladite structure de support, de sorte que ledit élément de sollicitation élastomère (22) peut être étiré lorsque ladite au moins une mâchoire (21) est déplacée dans une direction à distance de ladite surface de support (30), moyennant quoi ledit élément de sollicitation élastomère (22) exerce alors une force de sollicitation dans une direction opposée, ou bien ladite section de serrage:
(ii) comprend des première et seconde mâchoires d'étau (21d, 21e) configurées pour être en contact avec le capteur, le dispositif de maintien étant **caractérisé en ce que** ladite section de serrage comprend en outre un élément de sollicitation élastomère (22) adapté pour être étiré à différentes longueurs, acceptant ainsi des capteurs de différences tailles et formes ; ledit élément de sollicitation élastomère (22) ayant des première et seconde extrémités ; chacune desdites première et seconde extrémités dudit élément de sollicitation élastomère (22) étant fixée de manière opérationnelle auxdites première et seconde mâchoires (21d, 21e) respectivement, de sorte que ledit élément de sollicitation élastomère (22) peut être étiré lorsque au moins l'une desdites première ou seconde mâchoires (21d, 21e) est déplacée dans une direction à distance de l'autre desdites première ou seconde mâchoires (21d, 21e), moyennant quoi ledit élément de sollicitation élastomère (22) exerce alors une force de sollicitation dans une direction opposée.

2. Dispositif de maintien (10) selon la revendication 1, dans lequel ladite mâchoire (21) est prévue avec une lèvre destinée à être complémentaire de la structure du capteur (11) par rapport à laquelle elle est physiquement en contact lorsque le capteur (11) est maintenu dans le dispositif de maintien.

3. Dispositif de maintien (10) selon la revendication 1, dans lequel ladite surface de support (30) est formée de manière contiguë avec un bloc d'empreinte.

4. Dispositif de maintien (10) selon la revendication 1, dans lequel ladite première extrémité dudit élément de sollicitation élastomère (22) est prévue avec une partie emboîtable expansée qui peut être reçue à l'intérieur d'une partie de réception de forme sensiblement complémentaire dans ladite mâchoire (21).

5. Dispositif de maintien (10) selon la revendication 4, dans lequel la seconde extrémité dudit élément de sollicitation élastomère (22) est prévue avec une seconde partie emboîtable expansée qui peut être reçue à l'intérieur d'une partie de réception de forme sensiblement complémentaire dans ladite surface de support (30).

6. Dispositif de maintien (10) selon la revendication 4, dans lequel ladite partie expansée est reliée à ladite partie de réception.

7. Dispositif de maintien (10) selon la revendication 6, dans lequel ladite liaison est une liaison chimique.

8. Dispositif de maintien (10) selon la revendication 1, dans lequel ledit élément de sollicitation élastomère (22) est une longueur relativement plate d'un élastomère.

9. Dispositif de maintien (10) selon la revendication 8, dans lequel ledit élément de sollicitation élastomère (22) est prévu avec une section centrale entre lesdites première et seconde extrémités de ce dernier.

10. Procédé pour fixer un capteur de rayons X dentaire (11) destiné à être utilisé pendant la prise d'une radiographie dentaire, comprenant les étapes consistant à: fixer le capteur (11) avec un dispositif de maintien selon la revendication 1 ayant une section de serrage ; ladite section de serrage comprenant :
(a) une structure de support (30), et
(b) au moins une mâchoire d'étau rigide (21) configurée pour être physiquement en contact avec le capteur (11),
**caractérisé en ce que** ladite section de serrage comprend en outre un élément de sollicitation élastomère (22) ; ledit élément de sollicitation élastomère (22) ayant des première et seconde extrémités ; ladite première extrémité dudit élément de sollicitation élastomère (22) étant fixée de marnière opérationnelle à ladite au moins une mâchoire (21) et ladite seconde extrémité dudit élément de sollicitation élastomère (22) étant fixée sur ladite structure de support (30), de sorte que ledit élément de sollicitation élastomère (22) peut être étiré lorsque ladite au moins une mâchoire (21) est déplacée dans une direction à distance de ladite surface de support (30), moyennant quoi ledit élément de sollicitation élastomère (22) exerce alors une force de sollicitation dans une direction opposée.

11. Procédé selon la revendication 10, comprenant l'étape supplémentaire consistant à déplacer la mâchoire (21) dans une direction à distance de ladite surface de support (30), à placer le capteur (11) entre ladite mâchoire (21) et ladite surface de support (30) et à autoriser la force de sollicitation dudit élément de sollicitation élastomère (22) à tirer la mâchoire (21) en mise en prise physique avec le capteur (11).

12. Dispositif de maintien (10) selon la revendication 1, dans lequel ladite première mâchoire est prévue avec une voie recevant physiquement un rail porté par ladite seconde mâchoire, de sorte que le mouvement des faces desdites mâchoires est autorisé mais le mouvement latéral est limité.

13. Dispositif de maintien (10) selon la revendication 12, prévu avec une zone surmoulée pour le confort du patient.
